# EUROPEAN PATENT SPECIFICATION

(11) **EP 4 065 649 B1**
(45) Date of publication and mention of the grant of the patent: **03.01.2024**
(21) Application number: 20811416.5
(22) Date of filing: 27.11.2020
(51) Int. Cl.: C09D 5/16, C09D 5/00

(54) **FOULING RELEASE COATING**
FÄULNISFREISETZUNGSBESCHICHTUNG
REVÊTEMENT ANTI-SALISSURES

(30) Priority: 29.11.2019 EP 19212488
(43) Date of publication of application: 05.10.2022
(73) Proprietor: Jotun A/S, 3202 Sandefjord (NO)
(72) Inventor: KRINGHAUG, Henrik, 3115 Tønsberg (NO); HED, Kim, 3942 Porsgrunn (NO); SEIM, Marit, 3970 Langesund (NO); LIEN, Einar Magne, 0171 Oslo (NO)
(74) Representative: Dehns
(86) International application number: PCT/EP2020/083734
(87) International publication number: WO 2021/105429

(56) References cited:
- WO-A1-2011/076856
- WO-A1-2013/000478
- WO-A1-2014/117786

## Description

### Field of the invention

The invention relates to a fouling release coating composition, to a method of preparing such a fouling release coating, and to a marine structure coated with such a fouling release coating.

### Background

Surfaces that are submerged in seawater are subjected to fouling by marine organisms such as green and brown algae, slime, barnacles, mussels and tube worms. On marine constructions such as vessels (e.g. ships, tankers), oil platforms and buoys such fouling is undesired and has economic consequences. The fouling may lead to biological degradation of the surface, increased load and accelerated corrosion. On vessels the fouling increases the frictional resistance which will cause reduced speed and/or increased fuel consumption. It can also result in reduced maneuverability.

To prevent settlement and growth of marine organisms, antifouling paints are used. Conventionally, two types of antifouling paint are employed, self-polishing antifouling paint and fouling release antifouling paint.

A self-polishing antifouling paint comprises an antifouling agent and a binder that gradually dissolves and/or hydrolyses in sea water which enables sea water to erode the coating surface, thereby exposing a new surface. The most successful self-polishing antifouling paints are based on hydrolysable binders such as (meth)acrylate binders with hydrolysable silyl esters. The gradual hydrolysis in seawater provides a controlled release of the antifouling agent from the coating.

Fouling release antifouling paints provide coatings that have low surface tension and low modulus of elasticity and work by providing a fouling release surface to which sea organisms do not stick or if they do stick are washed off easily by the friction of the water against the surface or by cleaning. Such coatings are often based on polysiloxane-based binders. The fouling release surface created by the polysiloxane binder is efficient in prohibiting macro fouling from permanently sticking to the surface. However, the polysiloxane surface has not shown good resistance towards soft fouling such as slime and algae over time.

Polysiloxane based fouling release coatings (FRCs) have traditionally been used without biocides. As mentioned above, however, the challenge with FRCs is the attachment of soft fouling such as slime and algae. Use of polyether modified silicone oils in FRCs is known to reduce the attachment of slime and algae. In addition, in recent years, biocides effective against slime and algae have been added to FRCs to further improve the fouling protection. One type of biocides that has been found to work well is pyrithione salts such as copper pyrithione. However, there is still room for improvement for FRCs with biocides especially with regards to fouling protection, long term performance and adhesion.

The addition of biocides has been proven to provide a number of technical benefits including fouling prevention, reducing spray dust, and improving storage stability and reinforcing fouling prevention coatings. In particular, FRCs containing polyether-modified polysiloxane oils have been supplemented by addition of antifouling agents (e.g. pyrithione salts such as zinc pyrithione (ZnPt) and copper pyrithione (CuPt)). The antifouling agent (e.g. CuPt) is commonly present at around 5-7 dry-wt% and the polyether-modified silicone oil typically around 1-5 dry-wt%. However, adding the solid antifouling agent has a negative impact on the viscosity of the paint (it increases). An increased viscosity can normally be compensated for by increasing the solvent level (thinning) to maintain good application properties, but this results in an increased VOC and associated negative health effects for applicators and increased negative environmental impact. The present invention discloses a way to compensate for said increased viscosity without increasing the solvent content (VOC) of the coating formulation, and in some cases even reduce the VOC of the original composition.

The present inventors have surprisingly found that by incorporating, in a relatively high amount, non-ionic hydrophilic modified silicone oils with specific parameters (molecular weight and HLB), it is possible to obtain fouling release formulations containing antifouling agents that have low VOC, good application properties (viscosity), good film homogeneity and improved antifouling properties.

Traditionally is has been believed that you cannot have high amounts of polyether modified silicone oils in polysiloxane-based fouling release coatings because it would lead to a high polarity giving too high water uptake in the film, poor film homogeneity and poor adhesion. WO2011/076856 teaches coatings in which there is 4-7 wt.% of polyether modified silicone oil as an optimal level in combination with copper pyrithione biocide.

WO2014/117786 and WO2013/000478 additionally teach that the hydrophilic oil is present in low amounts, and refer to curable oils, which can be grafted to the main polysiloxane binder. The hydrophilic oils reported therein also have HLB values which are either too high or low.

WO2014/077205 teaches coatings comprising 0.13 wt.% of polyether modified silicone oil in combination with copper pyrithione biocide. It is als argued in WO2014/077205 that high amounts of polyether modified silicone oils (above 10 wt%) will give poor adhesion. WO2017/009297 discloses coating compositions with 4 wt% polyether modified silicone oil.

EP2514776 discloses higher amounts of silicone oil but concerns different binder systems based on metal-crosslinked organopolysiloxane-thio block vinyl copolymers. EP2103655 discloses antifouling compositions, and has a comparative example with a polyether-modified silicone oil, but with a high HLB value (14.5) and present in a large amount (>30 wt% by dry weight). We show in our examples that such high amounts and high HLB values lead to poor results in fouling release coatings.

### Summary of the invention

Viewed from one aspect the invention provides a fouling release coating composition comprising:
a) a curable polysiloxane based binder comprising at least 50 wt% polysiloxane parts;
b) an antifouling agent; and
c) 10-30% by dry weight of a non-ionic hydrophilic-modified polysiloxane having
   i) a hydrophilic-lipophilic balance (HLB) of 1-12 or a relative weight of hydrophilic moieties in the range of 5-60 wt%, and
   ii) an Mn of 500-18,000 g/mol or a Mw of 1,000-50,000 g/mol.

Viewed from another aspect the invention provides a marine structure comprising on at least a part of the outer surface thereof a fouling release coating as herein defined.

Viewed from another aspect the invention provides a process for preparing the fouling release coating composition as defined herein, comprising a step of mixing:
a) a curable polysiloxane-based binder comprising at least 50 wt% polysiloxane parts;
b) an antifouling agent; and
c) 10-30% by dry weight a non-ionic hydrophilic-modified polysiloxane typically in at least one solvent.

Viewed from another aspect, the invention provides a kit for preparing a fouling release coating composition as defined herein, comprising:
(i) a first container containing the curable polysiloxane based binder, the antifouling agent and/or the non-ionic hydrophilic-modified polysiloxane;
(ii) a second container containing a crosslinking agent and/or a curing agent and optionally a catalyst;
(iii) optionally a third container containing a catalyst; and
(iv) optionally instructions for combining the contents of said containers.

### DEFINITIONS

As used herein the term "fouling release composition" or "fouling release coating composition" refers to a composition which, when applied to a surface, provides a fouling release surface to which it is difficult for sea organisms to permanently stick.

As used herein the term "binder" refers to the film forming components of the composition. The polysiloxane-based binder of the composition is the main binder in the composition, i.e. it forms at least 50 wt% of the binder present. As used herein, the term "binder" does not encompass additive oils. Additive oils are not considered herein to be film-forming components.

As used herein the term "paint" refers to a composition comprising the fouling release coating composition as herein described and optionally solvent which is ready for use, e.g. for spraying. Thus the fouling release coating composition may itself be a paint or the fouling release coating composition may be a concentrate to which solvent is added to produce a paint.

As used herein the term "polysiloxane" refers to a polymer comprising siloxane, i.e. -Si-O- repeat units.

As used herein the term "polysiloxane-based binder" refers to a binder that comprises at least 50 wt%, preferably at least 60 wt% and more preferably at least 70 wt% repeat units comprising the motif -Si-O-, based on the total weight of the polymer. Polysiloxane-based binders may comprise up to 99.99 wt% repeat units comprising the motif -Si-O-, based on the total weight of the polymer. The repeat units, -Si-O- may be connected in a single sequence or alternatively may be interrupted by non-siloxane parts, e.g. organic-based parts.

As used herein the term "non-degradable polysiloxane-based binder" refers to a polysiloxane-based binder which does not undergo hydrolytic degradation or erosion in sea water.

As used herein the term "alkyl" refers to saturated, straight chained, branched or cyclic groups. Alkyl groups may be substituted or unsubstituted.

As used herein the term "cycloalkyl" refers to a cyclic alkyl group.

As used herein the term "alkylene" refers to a bivalent alkyl group.

As used herein the term "alkenyl" refers to unsaturated, straight chained, branched or cyclic groups. Alkenyl groups may be substituted or unsubstituted.

As used herein the term "aryl" refers to a group comprising at least one aromatic ring. The term aryl encompasses heteroaryl as well as fused ring systems wherein one or more aromatic ring is fused to a cycloalkyl ring. Aryl groups may be substituted or unsubstituted. An example of an aryl group is phenyl, i.e. C₆H₅. Phenyl groups may be substituted or unsubstituted.

As used herein the term "substituted" refers to a group wherein one or more, for example up to 6, more particularly 1, 2, 3, 4, 5 or 6, of the hydrogen atoms in the group are replaced independently of each other by the corresponding number of the described substituents. The term "optionally substituted" as used herein means substituted or unsubstituted.

As used herein the term "arylalkyl" group refers to groups wherein the bond to the Si is via the alkyl portion.

As used herein the term "polyether" refers to a compound comprising two or more -O- linkages interrupted by alkylene units.

As used herein the terms "poly(alkylene oxide)", "poly(oxyalkylene) and "poly(alkylene glycol)" refer to a compound comprising -alkylene-O- repeat units. Typically the alkylene is ethylene or propylene.

As used herein the term "(meth)acrylate" encompasses both methacrylate and acrylate.

As used herein the term wt.% is based on the dry weight of the coating composition, unless otherwise specified

As used herein the term "PDI" or polydispersity index refers to the ratio Mw/Mn, wherein Mw refers to weight average molecular weight and Mn refers to number average molecular weight. PDI is sometimes alternatively referred to as D (dispersity).

As used herein the term "volatile organic compound (VOC)" refers to a compound having a boiling point of 250 °C or less.

As used herein "antifouling agent" refers to a biologically active compound or mixture of biologically active compounds that prevents the settlement of marine organisms on a surface, and/or prevents the growth of marine organisms on a surface and/or encourages the dislodgement of marine organisms from a surface.

### Detailed description

This invention relates to a fouling release coating composition comprising:
a) a curable polysiloxane based binder comprising at least 50 wt% polysiloxane parts;
b) an antifouling agent; and
c) 10-30% by dry weight of a non-ionic hydrophilic-modified polysiloxane having
   i) a hydrophilic-lipophilic balance (HLB) of 1-12 or a relative weight of hydrophilic moieties in the range of 5-60 wt%, and
   ii) an Mn of 500-18,000 g/mol and/or a Mw of 1,000-50,000 g/mol.

### Polysiloxane-based binder

The binder in the fouling release coating composition comprises a curable polysiloxane-based binder component (a). The polysiloxane-based binder is preferably a non-degradable curable polysiloxane-based binder. When the polysiloxane is a non-degradable polysiloxane-based binder, the fouling release coating composition of the invention provides a pure fouling release coating.

The polysiloxane-based binder present in the coating compositions of the present invention comprises at least 50 wt% polysiloxane parts, preferably more than 60 wt% polysiloxane parts and still more preferably more than 70 wt% polysiloxane parts such as 99.99 wt% polysiloxane parts or more. Typical ranges include 50-100 wt% polysiloxane parts, 60-99.999 wt% polysiloxane parts, or 70-99.99 wt% polysiloxane parts in the polysiloxane-based binder.

The polysiloxane parts are defined as repeat units comprising the motif -Si-O- based on the total weight of the polysiloxane-based binder. The wt% of polysiloxane parts can be determined based on the stoichiometric wt ratio of starting materials in the polysiloxane synthesis. Alternatively, the polysiloxane content can be determined using analytical techniques such as IR or NMR.

Typically, the wt.% of polysiloxane parts is calculated based on the molar ratio of reactive starting materials in the polysiloxane synthesis. If a molar excess of a monomer is present in the reaction mixture then such a molar excess is not counted. Only those monomers that can react based on the stoichiometry of the reaction are counted.

Information about the wt.% polysiloxane parts in a commercially available polysiloxane-based binder is easily obtainable from the supplier.

It is to be understood that the polysiloxane-based binder can consist of a single repeating sequence of siloxane units or be interrupted by non-siloxane parts, e.g. organic parts. It is preferred if the polysiloxane-based binder contains only Si-O repeating units.

The organic parts may comprise, for example, alkylene, arylene, poly(alkylene oxide), amide, thioether or combinations thereof, preferably the organic parts may comprise, for example, alkylene, arylene, poly(alkylene oxide), amide, or combinations thereof. In a particular embodiment, the polysiloxane-based binder does not contain any thio groups.

The polysiloxane-based binder present in the fouling release coating compositions of the present invention can in principle be any curable polysiloxane-based binder. By curable means that the polysiloxane-based binder comprises functional groups that enable a crosslinking reaction to take place either between polysiloxane-based binder molecules or via a crosslinking agent.

The polysiloxane-based binder is preferably an organopolysiloxane with terminal and/or pendant curing-reactive functional groups. A minimum of two curing-reactive functional groups per molecule is preferred. Examples of curing-reactive functional groups are silanol, alkoxy, acetoxy, enoxy, ketoxime, alcohol, amine, epoxy and/or isocyanate. A preferred polysiloxane-based binder contains curing-reactive functional groups selected from silanol, alkoxy or acetoxy groups. The curing reaction is typically a condensation cure reaction. The polysiloxane-based binder optionally comprises more than one type of curing-reactive group and may be cured, for example, via both condensation cure and amine/epoxy curing.

The polysiloxane-based binder may consist of only one type of polysiloxane or be a mixture of different polysiloxanes.

A preferred polysiloxane-based binder present in the fouling release coating compositions of the present invention is represented by formula (D1) below: 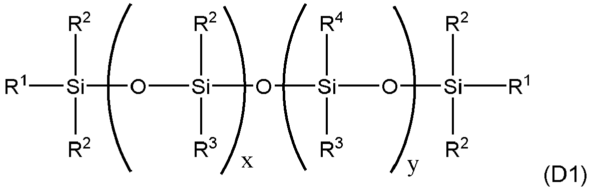 wherein
each R¹ is independently selected from a hydroxyl group, C₁₋₆-alkoxy group, C₁₋₆-hydroxyl group, C₁₋₆-epoxy containing group, C₁₋₆ amine group or O-Si(R⁵)₃-_{z} (R⁶)_{z} each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from an unsubstituted or substituted C₁₋₆ alkyl group;
z is 0 or an integer from 1-2;
x is an integer of at least 2;
y is an integer of at least 2.

Preferably R¹ is selected from a hydroxyl group and O-Si(R⁵)₃-_{z}(R⁶)_{z}, wherein R⁵ is a C₁-C₆ alkoxy group, R⁶ is C₁₋₆ alkyl and z is 0 or an integer from 1-2. More preferably R¹ is selected from a hydroxyl group and O-Si(R⁵)_{3-z}(R⁶)_{z}, wherein R⁵ is a C₁-C₃ alkoxy group, R⁶ is C₁₋₃ alkyl and z is 0 or an integer from 1-2. Still more preferably R¹ is a hydroxyl group.

Preferably R² is a C₁₋₁₀ alkyl group. More preferably R² is a C₁₋₄ alkyl group, still more preferably a C₁₋₂ alkyl group, and yet more preferably a methyl group. Preferably each R² is the same.

Preferably R³ is a C₁₋₁₀ alkyl group. More preferably R³ is a C₁₋₄ alkyl group, still more preferably a C₁₋₂ alkyl group, and yet more preferably a methyl group. Preferably each R³ is the same.

Preferably R⁴ is a C₁₋₁₀ alkyl group. More preferably R⁴ is a C₁₋₄ alkyl group, still more preferably a C₁₋₂ alkyl group, and yet more preferably a methyl group. Preferably each R⁴ is the same.

Still more preferably R¹ is a hydroxyl group and R², R³ and R⁴ are each methyl groups.

Another preferred polysiloxane-based binder present in the fouling release coating compositions of the present invention is represented by formula (D2) below: 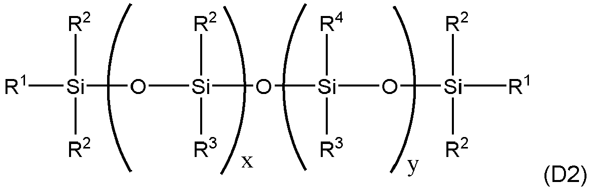 wherein
each R¹ is independently selected from a hydroxyl group, C₁₋₆-alkoxy group, C₁₋₆-hydroxyl group, C₁₋₆-epoxy containing group, C₁₋₆ amine group or O-Si(R⁵)₃-_{z} (R⁶)_{z} each R² to R⁴ are methyl;
each R⁵ is independently a hydrolysable group such as C₁₋₆ alkoxy group, an acetoxy group, an enoxy group or ketoxy group;
each R⁶ is independently selected from an unsubstituted or substituted C₁₋₆ alkyl group;
z is 0 or an integer from 1-2;
x is an integer of at least 2;
y is an integer of at least 2.

Another preferred polysiloxane-based binder present in the fouling release coating compositions of the present invention is represented by formula (D3) below: 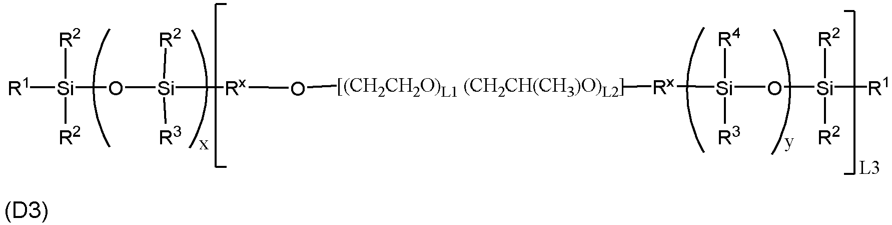 wherein R¹, R², R³, R⁴ and x and y are as defined for (D1), R^{x} is C₂₋₃ alkyl, each L1 is 0 to 50, each L2 is 0 to 50 with the proviso that L1+L2 is 2 to 50, preferably 4 to 40, more preferably 4 - 20, most preferably 4-10 and L3 is 1-200, preferably 2-100, most preferably 5-50. The polysiloxane parts must form a minimum of 50 wt% of the molecule.

Preferably the polysiloxane-based binder of the present invention is represented by formula D1.

The skilled person will be aware that the polysiloxane-based binder may contain low amounts of impurities, such as cyclic siloxanes, such as D4, D5 and D6 cyclosiloxanes, that are residues from polysiloxane synthesis, where the name (D4, D5, or D6) refers to the number of repeating Si-O units in the cyclic polysiloxane (i.e. 4, 5 or 6 repeating Si-O units in the cyclic polysiloxane respectively). From a health, safety, and environmental aspect, it is preferred to limit the amount of cyclic polysiloxanes present in the coating. In one preferred embodiment the polysiloxane-based binder contains less than 5% of cyclic polysiloxanes, preferable less than 2%, more preferably less than 1%. In one particularly preferred embodiment, the polysiloxane-based binder is free of cyclic polysiloxanes.

The weight average molecular weight of the polysiloxane-based binder present in the fouling release coating compositions of the present invention is preferably 400-150,000 g/mol, more preferably 1000-120,000 g/mol, and still more preferably 5000-110,000 g/mol.

In one embodiment, the polysiloxane binder (a) does not satisfy the HLB parameter of the non-ionic hydrophilic modified polysiloxane component (c). In particular, the polysiloxane binder may have an HLB value of less than 0.5, such as less than 0.1.

Preferred coating compositions of the present invention comprise 30-95 wt% polysiloxane-based binder, more preferably 40-90 wt% polysiloxane-based binder and still more preferably 50-90 wt% polysiloxane-based binder, based on the total dry weight of the composition.

Suitable polysiloxane-based binders for use in the coating composition of the present invention are commercially available. Representative commercially available non-degradable polysiloxane based binders include Xiameter^{®} OHX-0135, Xiameter^{®} OHX-4000, Xiameter^{®} OHX-4010, Xiameter^{®} OHX-4040, Xiameter^{®} OHX-4050, Xiameter^{®} OHX-4060 from Dow Corning, PolymerOH 0.08, PolymerOH 0.75, Polymer OH 1, PolymerOH 2, PolymerOH 3.5, Polymer OH 5, Polymer OH20, PolymerOH 80 from Evonik and DMS-S15, DMS-S21, DMS-S27, DMS-S31, DMS-S32, DMS-S33, DMS-S35, DMS-S42, DMS-S51 from Gelest.

### Antifouling agent

The antifouling coating composition of the present invention comprises an antifouling agent (b).

The terms antifouling agent, biologically active compounds, antifoulant, biocide, toxicant are used in the industry to describe known compounds that act to prevent marine fouling on a surface. The antifouling agent present in the compositions of the invention is preferably a marine antifouling agent. The antifouling agent may be inorganic, organometallic or organic. Preferably the antifouling agent is an organometallic antifouling agent. Suitable antifouling agents are commercially available.

Examples of inorganic antifouling agents include copper and copper compounds such as copper oxides, e.g. cuprous oxide and cupric oxide; copper alloys, e.g. copper-nickel alloys; copper salts, e.g. copper thiocyanate and copper sulphide.

Examples of organometallic antifouling agents include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylene bis(dithiocarbamate) complexed with zinc salt [mancozeb].

Examples of organic antifouling agents include heterocyclic compounds such as 2-(tert-butylamino)-4-(cyclopropylamino)-6-(methylthio)-1,3,5- triazine [cybutryne], 4,5-dichloro-2-n-octyl-4-isothiazolin-3-one [DCOIT], encapsulated 4,5-dichloro-2-n-octyl-4-isothiazolin-3-one [DCOIT], 1,2-benzisothiazolin-3-one, 2-(thiocyanatomethylthio)-1,3-benzothiazole [benthiazole] and 2,3,5,6-tetrachloro-4-(methylsulphonyl) pyridine; urea derivatives such as 3-(3,4-dichlorophenyl)-1,1-dimethylurea [diuron]; amides and imides of carboxylic acids, sulphonic acids and sulphenic acids such as N-(dichlorofluoromethylthio)phthalimide, N-dichlorofluoromethylthio-N',N'-dimethyl-N-phenylsulfamide [dichlofluanid], N-dichlorofluoromethylthio-N',N'-dimethyl-N-p-tolylsulfamide [tolylfluanid] and N-(2,4,6-trichlorophenyl)maleimide; other organic compounds such as pyridine triphenylborane [TPBP], amine triphenylborane, 3-iodo-2-propynyl N-butylcarbamate [iodocarb], 2,4,5,6-tetrachloroisophthalonitrile, p-((diiodomethyl)sulphonyl) toluene and 4-bromo-2-(4-chlorophenyl)-5 - (trifluoromethyl)- 1H-pyrrole-3-carbonitrile [tralopyril] and quaternary ammonium salts.

Other examples of antifouling agents include tetraalkylphosphonium halogenides, guanidine derivatives, imidazole containing compounds such as 4-[1-(2,3-dimethylphenyl)ethyl]-1H-imidazole [medetomidine] and derivatives thereof, macrocyclic lactones including avermectins and derivatives thereof such as ivermectine, spinosyns and derivatives thereof such as spinosad, capsaicins and derivatives thereof such as phenyl capsaicin, and enzymes such as oxidase, proteolytically, hemicellulolytically, cellulolytically, lipolytically and amylolytically active enzymes.

Preferred antifouling agents are zinc pyrithione, copper pyrithione, zinc ethylenebis(dithiocarbamate) [zineb], 4,5-dichloro-2-n-octyl-4-isothiazolin-3-one [DCOIT] and encapsulated 4,5-dichloro-2-n-octyl-4-isothiazolin-3-one [DCOIT]. Particularly preferred antifouling agents are zinc pyrithione and copper pyrithione, particularly copper pyrithione.

In the present invention, FRCs containing non-ionic hydrophilic-modified polysiloxane oils have typically been supplemented by addition of pyrithione salt biocides (zinc pyrithione (ZnPt) and copper pyrithione (CuPt)). In the patent literature, CuPt is commonly present at around 5-7 dry-wt% and a polyether-modified oil typically around 1-5 dry-wt%. However, adding the solid pyrithione salt, which has needle-like morphology, has a negative impact on the viscosity of the paint (it increases). An increased viscosity can normally be compensated for by increasing the solvent level (thinning) to maintain good application properties, albeit with an increased VOC and associated negative health effects for applicators and increased negative environmental impact. This invention discloses a way to compensate for said increased viscosity without increasing the solvent content (VOC) of the coating formulation, and in some cases even reduce the VOC of the original composition.

The biocide is typically present in 1-20 % by dry weight of the total coating composition, preferably 1-15 %, 2-15 % or 3-12 % by dry weight of the total coating composition. The use of these antifouling agents is known in antifouling coatings and their use would be familiar to the skilled person. The antifouling agent may be encapsulated or adsorbed on an inert carrier or bonded to other materials for controlled release. These percentages refer to the amount of active antifouling agent present and not therefore to any carrier used.

### Non-ionic hydrophilic modified polysiloxane

The coating composition of the invention comprises a non-ionic hydrophilic modified polysiloxane (c). It will be appreciated that this component is different from the polysiloxane binder component (a). A coating composition must therefore comprise two different components (a) and (c). In one embodiment, the polysiloxane binder (a) does not satisfy the HLB parameter of the non-ionic hydrophilic modified polysiloxane component (c). In particular, the polysiloxane binder may have an HLB value of less than 0.5, such as less than 0.1.

It should be understood the non-ionic hydrophilic modified polysiloxane does not contain reactive groups that will react with the binder or the crosslinker during the curing reaction at relevant curing temperatures (0 - 40 °C). Hence the non-ionic hydrophilic-modified polysiloxane is intended to be non-reactive in the curing reaction, in particular with respect to the binder components.

It should be understood that depending on the curing reactive groups on the binder, a hydrophilic modified polysiloxane will be chosen so that it does not comprise any groups that will react with the binder or the crosslinker if present in the curing reaction. The non-ionic hydrophilic modified polysiloxane is therefore a non-curable component in the coating composition. Non-curable herein means that the non-ionic hydrophilic modified polysiloxane does not react with the binder or the crosslinker during the curing reaction at a temperature range of 0 - 40 °C.

In one preferred embodiment the non-ionic hydrophilic modified polysiloxane does not contain silicone reactive groups such as Si-OH groups, Si-OR (alkoxy), enoxy, ketoxime roups etc. that can react with the binder or the cross-linker (if present) at relevant curing temperatures (0 - 40 °C).

In a particular embodiment, the non-ionic hydrophilic modified polysiloxane does not contain any Si-OH group or Si-OR (alkoxy, i.e. R = alkyl) groups.

Non-ionic hydrophilic-modified polysiloxanes are widely used as surfactants and emulsifiers due to the content of both hydrophilic and lipophilic groups in the same molecule. A non-ionic hydrophilic modified polysiloxane according to the present invention is a polysiloxane that is modified with non-ionic hydrophilic groups to make it more hydrophilic compared to the corresponding unsubstituted polysiloxane having the same number of polysiloxane units. The hydrophilicity can be obtained by modification with non-ionic hydrophilic groups such as ethers (e.g polyoxyalkylene groups such as polyethylene glycol and polypropylene glycol), alcohols (e.g poly(glycerol), amides (e.g pyrroliodone, polyvinylpyrrolidone, (meth)acrylamide) acids (e.g carboxylic acids, poly (meth) acrylic acid), amines (e.g polyvinylamine, (meth) acrylic polymers comprising amine groups). Typically, the non-ionic hydrophilic-modified polysiloxane is an oil.

'Non-ionic' herein means that the hydrophilic-modified polysiloxane does not contain any salt moieties; in particular, it typically does not contain any metal cations.

The hydrophilicity of the non-ionic hydrophilic modified polysiloxanes is determined in accordance with the HLB (hydrophilic-lipophilic balance) parameter. The non-ionic hydrophilic modified polysiloxane of the present invention has an HLB (hydrophilic-lipophilic balance) in the range 1-12, preferably 1.0-10, more preferably 1.0-8.0, most preferably 2.0-7.0. In a particular embodiment, the non-ionic hydrophilic modified polysiloxane has an HLB in the range 3.0-6.0. The HLB is herein typically determined according to Griffin's model using the equation "wt% hydrophilic groups"/5 (Reference: Griffin, W. C. Calculation of HLB values of non-ionic surfactants, J. Soc. Cosmet. Chem. 1954, 5, 249 - 256). In a particular embodiment, therefore, the HLB is calculated according to the equation HLB = 'wt% of hydrophilic groups'/5. The HLB parameter is a well-established parameter for non-ionic surfactants and is readily available from the suppliers of commercially available non-ionic hydrophilic modified polysiloxanes. The higher surfactant HLB value, the more hydrophilic it is. By wt% hydrophilic groups means the wt% of hydrophilic groups in the non-ionic hydrophilic modified polysiloxane. The wt% hydrophilic groups can be converted into HLB values, and vice-versa. An HLB value of 1-12 is equivalent to a wt% hydrophilic groups of 5-60 wt%, for example.

The function of the non-ionic hydrophilic modified polysiloxane is to facilitate the dissolution and transport of the biocide to the surface of the coating film. In addition, it is also well known that formation of a hydrated layer at the coating-water interphase is important for the fouling protection performance.

If the hydrophilicity of the non-ionic hydrophilic modified polysiloxane is too high, for example due to a high amount of hydrophilic groups in the molecule, this could lead to an early depletion of the biocide(s) and the non-ionic hydrophilic modified polysiloxane due to a too high leaching rate. A high hydrophilicity will also give poor compatibility with the polysiloxane based binder matrix, especially if high oil amounts (more than 10 wt.%) are used, giving poor film homogeneity and poor adhesion.

The ways to control the leach rate of the biocide and the non-ionic hydrophilic modified polysiloxane include the molecular weight of the non-ionic hydrophilic modified polysiloxane, the hydrophilicity and the miscibility with the binder. A very low molecular weight non-ionic hydrophilic modified polysiloxane tends to allow a high leach rate, while too high molecular weight may not allow the leaching of the biocide and the non-ionic hydrophilic modified polysiloxane to be of the desired rate.

Hence, in a preferred embodiment, the non-ionic hydrophilic modified polysiloxane has a number average molecular weight (Mn) in the range of 500-18,000 g/mol, such as in the range of 1000-16,000 g/mol, particularly in the ranges 2000-15,050 g/mol or 4000-15,050 g/mol . Further suitable Mn ranges for the non-ionic hydrophilic modified polysiloxane include 500-15,000 g/mol, 1,000-13,000 g/mol or 3,000-10,000 g/mol. Number average molecular weight (Mn) values referred to herein correspond to the experimentally obtained values, e.g. by GPC measured relative to a polystyrene standard. The method is given in the experimental section below.

In a preferred embodiment, the non-ionic hydrophilic modified polysiloxane has a weight average molecular weight (Mw) of 1,000-50,000 g/mol, preferably in the ranges of 2,000-45,000 g/mol, 3,000-42,000 g/mol, 4,000-40,000 g/mol, or 5,000-40,000 g/mol. Further suitable ranges include 5,000-30,000 g/mol, e.g. 5,000-25,000 g/mol or 10,000-20,000 g/mol. Weight average molecular weight (Mw) values referred to herein correspond to the experimentally obtained values, e.g. by GPC measured relative to a polystyrene standard. The method is given in the experimental section below.

The particular ranges of Mn or Mw are important for the beneficial properties of the present invention. Indeed, these molecular weights affect viscosity, which in turn affects ease of application and surface roughness. These molecular weights also affect the transport of the biocide and non-ionic hydrophilic modified polysiloxane to the surface of the coating film which in turn affects the fouling protection performance.

It is also preferred if the non-ionic hydrophilic modified polysiloxane has a viscosity in the range of 20-4,000 mPa-s, such as in the range of 30-3,000 mPa-s, in particular in the range of 50-2,500 mPa-s, when measured according to the method given in the experimental section.

The amount of non-ionic hydrophilic modified polysiloxane that is included in the coating composition is also an important parameter. A too low amount will give a coating composition with high viscosity which in turn might lead to poor application properties. Alternatively, more solvent needs to be added giving a coating composition with a higher VOC. A low amount of the non-ionic hydrophilic modified polysiloxane might also lead to a poor long-term fouling protection of the coating as the non-ionic hydrophilic modified polysiloxane might be depleted from the film too early. A too high amount of the non-ionic hydrophilic modified polysiloxane leads to a poor film homogeneity and a poor fouling protection.

The non-ionic hydrophilic modified polysiloxane is included in the coating composition in an amount of 10-30 wt% by dry weight (e.g. 10-25 wt% by dry weight), preferably 11-29 wt% by dry weight, preferably 12-28% by dry weight, preferably 13-27% by dry weight, preferably 14-26% by dry weight, e.g. 15-25 wt% by dry weight. Where there are two or more different types of non-ionic hydrophilic modified polysiloxanes , these amounts refer to the total sum of the non-ionic hydrophilic modified polysiloxane components.

Of particular interest are those non-ionic hydrophilic-modified polysiloxanes in which the relative weight of the hydrophilic moieties (e.g. polyether groups) is 5% or more of the total weight (e.g. 5-60%), such as 6% or more (e.g. 6-50%), in particular 10% or more (e.g. 10-40%) of the total weight of the non-ionic hydrophilic-modified polysiloxane. Other suitable ranges for the relative weight of the hydrophilic moieties in the non-ionic hydrophilic-modified polysiloxanes include 5 - 60 wt.%, preferably 5 - 50 wt.%, more preferably 5 - 40 wt.%, most preferably 10 - 35 wt.%, particularly 15 - 30 wt.%.

The wt.% of the hydrophilic moieties can be calculated based on the stoichiometric ratio of starting materials in the non-ionic hydrophilic modified polysiloxane synthesis, or it can be determined using analytical techniques such as IR or NMR.

If there is a molar excess of a reactant then such a molar excess is not counted when determining the wt.% of hydrophilic moieties. Only those monomers that can react based on the stoichiometry of the reaction are counted.

If the HLB is known, the wt% of the hydrophilic moieties can also be calculated according to Griffin's model using the equation HLB = "wt% hydrophilic groups"/5.

The non-ionic hydrophilic modified polysiloxane may contain low amounts of impurities, such as cyclic siloxanes, such as D4, D5 and D6 cyclosiloxanes, that are residues from polysiloxane synthesis, where the name (D4, D5 and D6) refers to the number of repeating Si-O units in the cyclic polysiloxane (i.e. 4, 5 or 6 repeating Si-O units in the cyclic polysiloxane respectively). From a health, safety, and environmental aspect it is preferred to limit the amount of cyclic polysiloxanes present in the coating composition. In one preferred embodiment, the non-ionic hydrophilic modified polysiloxane contains less than 5% of cyclic polysiloxanes, preferable less than 2%, more preferably less than 1%. In one particularly preferred embodiment, the non-ionic hydrophilic modified polysiloxane is free of cyclic polysiloxanes.

In one preferred embodiment the non-ionic hydrophilic modified polysiloxane is a polyether modified polysiloxane, i.e. the hydrophilic moieties are polyether groups.

Preferably, the polyether groups include at least 3 repeating units, such as at least 5 repeating units. In many interesting embodiments, the oligomers or polymers include 5-100 repeating units, such as 5-50, or 8-50, or 8-20 repeating units.

In some preferred embodiments, the polyether groups (i.e. oligomeric or polymeric groups) have a number average molecular weight (n) in the range of 100-2500 g/mol, such as in the range of 200-2000 g/mol, in particular in the range of 300-2000 g/mol, or in the range of 400-1000 g/mol.

Of particular interest are those polyether-modified polysiloxanes in which the relative weight of the polyether moieties is 5% or more of the total weight (e.g. 5-60%), such as 6% or more (e.g. 6-50%), in particular 10% or more (e.g. 10-40%) of the total weight of the polyether-modified polysiloxane.

In one variant hereof, the polyether-modified polysiloxane is a polysiloxane having grafted thereto poly(oxyalkylene) chains. An illustrative example of the structure of such polyether-modified polysiloxane is formula (A): 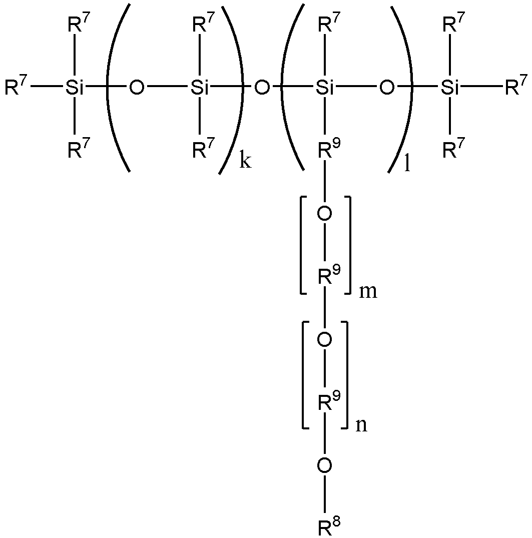 wherein each R⁷ is independently selected from C₁₋₅-alkyl (including linear or branched hydrocarbon groups) and aryl (e.g. phenyl (-C₆H₅)), in particular methyl;
each R⁸ is independently selected from -H, C₁₋₄-alkyl (e.g. -CH₃, -CH₂CH₃, - CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, - C(=O)CH₂CH₃ and -C(=O)CH₂CH₂CH₃), in particular -H, methyl and -C(=O)CH₃ ;
each R⁹ is independently selected from C₂₋₅-alkylene (e.g. -CH₂CH₂-, - CH₂CH(CH₃), -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-);
k is 0-240, I is 1-60 and k+I is 1-240; and
n is 0-50, m is 0-50 and m+n is 1-50.

In particular R⁷ is methyl;
each R⁸ is independently selected from -H or C₁₋₄-alkyl or -C(=O)CH₃ ;
each R⁹ is -CH₂CH₂-, or -CH₂CH₂CH₂-, or -CH₂CH(CH₃)-);
k is 0-240, I is 1-60 and k+I is 1-240; and
n is 0-50, m is 0-50 and m+n is 1-50.

It is preferred if all R⁷ groups are the same.

Examples of commercially available polyether-modified polysiloxanes of this type are KF352A, KF353, KF945, KF6012, KF6017 from ShinEtsu. XIAMETER OFX-5220, DOWSIL OFX-5247, XIAMETER OFX-5329, XIAMETER OFX-5330 from DOW.

In another variant hereof, the polyether-modified polysiloxane is a polysiloxane having incorporated in the backbone thereof poly(oxyalkylene) chains. An illustrative example of the structure of such hydrophilic-modified polysiloxanes is formula (B): 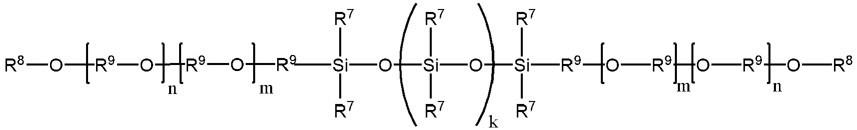 wherein each R⁷ is independently selected from C₁₋₅-alkyl (including linear or branched hydrocarbon groups) and aryl (e.g. phenyl (-C₆H₅)), in particular methyl;
each R⁸ is independently selected from -H, C₁₋₄-alkyl (e.g. -CH₃, -CH₂CH₃, - CH₂CH₂CH -CH(CH₃)₂, -CH₂CH₂CH₂CH₃), phenyl (-C₆H₅), and C₁₋₄-alkylcarbonyl (e.g. -C(=O)CH₃, C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-, - CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂ - and -CH₂CH(CH₃)-) ;
k is 0-240;
and n is 0-50, m is 0-50 and m+n is 1-50.

In particular, wherein R⁷ is methyl;
each R⁸ is independently selected from -H or C₁₋₄-alkyl or -C(=O)CH₃;
each R⁹ is -CH₂CH₂-, -CH₂CH(CH₃)-, or -CH₂CH₂CH₂-;
k is 0-240;
and n is 0-50, m is 0-50 and m+n is 1-50.

It is preferred if all R⁷ groups are the same.

Commercially available hydrophilic-modified polysiloxanes of this type are DOWSIL 2-8692 and XIAMETER OFX-3667 from DOW.

In still another variant, the polyether-modified polysiloxane is a polysiloxane having incorporated in the backbone thereof polyoxyalkylene chains and having grafted thereto polyoxyalkylene chains. An illustrative example of the structure of such hydrophilic- modified polysiloxanes is formula (C) : 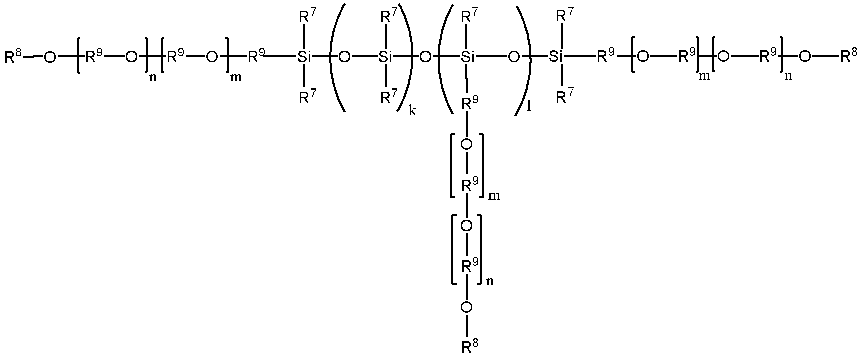 wherein each R⁷ is independently selected from C₁₋₅-alkyl (including linear or branched hydrocarbon groups) and aryl (e.g. phenyl (-C₆H₅)), In particular methyl;
each R⁸ is independently selected from -H, C₁₋₄-alkyl (e.g. -CH₃, -CH₂CH₃, - CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, - C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-, - CH₂CH(CH₃) -, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-);
k is 0-240, I is 1-60 and k+I is 1-240;
n is 0-50, m is 0-50 and m + n is 1-50.

In particular, R⁷ is methyl;
each R⁸ is -H, or C₁₋₄-alkyl or -C(=O)CH₃;
each R⁹ is -CH₂CH₂-, -CH₂CH₂CH₂-, -or -CH₂CH(CH₃)-;
k is 0-240, y is 1-60 and x+y is 1-240;
n is 0-50, m is 0-50 and m + n is 1-50.

In the above structures (A), (B) and (C), the groups -CH₂CH(CH₃)-, - CH₂CH(CH₂CH₃)-, etc. may be present in any of the two possible orientations. Similarly, it should be understood that the segments present k and I times typically are randomly distributed in the polysiloxane structure.

In these embodiments and variants, the polyether or poly(oxyalkylene) is preferably selected from polyoxyethylene, polyoxypropylene and poly(oxyethylene-co-oxypropylene), which sometimes are referred to as polyethylene glycol, polypropylene glycol and poly(ethylene glycol-co-propylene glycol). Hence, in the above structures (A), (B) and (C), each R⁹ linking two oxygen atoms is preferably selected from -CH₂CH₂- and -CH₂CH(CH₃)-, whereas each R⁹ linking a silicon atom and an oxygen atom preferably is selected from C₂₋₅-alkyl.

In some embodiments of the above structures (A), (B) and (C), R⁸ is preferably not hydrogen.

It should be understood that the one or more polyether modified polysiloxanes may be of different types, e.g. two or more of the types described above.

In another preferred embodiment the non-ionic hydrophilic modified polysiloxane comprises polyglycerol groups or pyrrolidone groups.

### Cross linking and/or curing agent

As described above, the polysiloxane-based binder of the present invention is curable and contains curing-reactive functional groups such as silanol, carbinol, carboxyl, ester, hydride, alkenyl, vinyl ether, allyl ether, alkoxysilane, ketoxime, amine, epoxy, isocyanate and/or alkoxy groups. Preferably the polysiloxane-based binder contains at least two curing-reactive functional groups. Optionally the polysiloxane-based binder comprises more than one type of curing-reactive functional group. Preferably the polysiloxane-based binder comprises a single type of curing-reactive functional group. The appropriate crosslinking and/or curing agents are chosen depending on the curing-reactive functional groups present in the polysiloxane-based binder.

In preferred polysiloxane-based binders the curing-reactive functional groups are silanol, carbinol, alkoxysilane, isocyanate, amine and/or epoxy. In still further preferred polysiloxane-based binders the curing-reactive functional groups are silanol, carbinol and/or alkoxysilane.

It may be necessary to add a crosslinker to obtain the desired crosslinking density. If the curing-reactive functional groups are silanol, a preferred crosslinking agent is an organosilicon compound represented by the general formula shown below, a partial hydrolysis-condensation product thereof, or a mixture of the two:

R_{d}-Si-K_{4-d}

wherein,
each R is independently selected from an unsubstituted or substituted monovalent hydrocarbon group of 1 to 6 carbon atoms, C₁₋₆ alkyl substituted by poly(alkylene oxide) or a polysiloxane of the structure (O-(CR^{D}₂)_{r'})_{r1'} - (O-(CR^{D}₂)_{s'})_{s1'}-(Si(R^{PP})₂-O)_{t'}-Si(R^{PP})₃; wherein r', r1', s' and s1' is an integer from 0-10, each R^{D} is independently selected from H or C₁₋₄ alkyl, each R^{PP} is independently selected from C₁₋₁₀ alkyl, C₆₋₁₀ aryl, C₇₋₁₀ alkylaryl and t' is an integer from 1 to 50.;
each K is independently selected from a hydrolysable group such as an alkoxy group; and d is 0, 1 or 2, more preferably 0 or 1.

Preferred crosslinkers of this type include tetraethoxysilane, vinyltris(methylethyloximo)silane, methyltris(methylethyloximo)silane, vinyltrimethoxysilane, methyltrimethoxysilane and vinyltriisopropenoxysilane as well as hydrolysis-condensation products thereof.

If the curing-reactive functional groups are di or tri-alkoxy, a separate crosslinking agent is generally not required.

The crosslinking agent is preferably present in amount of 0-10 wt% of the total dry weight of the coating composition. Suitable crosslinking agents are commercially available, such as Silcate TES-40 WN from Wacker and Dynasylan A from Evonik.

If the curing-reactive functional groups are carbinol, preferred curing agents are monomeric isocyanates, polymeric isocyanates and isocyanate prepolymers. Polyisocyanates are preferred over monomeric isocyanates because of lower toxicity. Polyisocyanates can for example be based on diphenylmethane diisocyanate (MDI), toluene diisocyanate (TDI), hexamethylene diisocyanate (HDI) and isophorone diisocyanate (IPDI) chemistry. These are, for example, supplied under the tradename Desmodur by Covestro and Tolonate by Vencorex. Examples of polyisocyanates are Desmodur N3300, Desmodur 3390 BA/SN, Desmodur N3400, Desmodur N3600 Desmodur N75, Desmodur XP2580, Desmodur Z4470, Desmodur XP2565 and Desmodur VL, supplied by Covestro.

Polyisocyanates can be made with different NCO-functionality. The NCO-functionality is the amount of NCO-groups per polyisocyanate molecule or isocyanate prepolymer molecule. Polyisocyanates curing agents with different NCO-functionality can be used.

The curing agent is preferably present in an amount of 0.8-2.5 equivalents (equiv) NCO groups relative the amount of hydroxyl groups, preferably 0.9-2.0 equiv, more preferably 0.95-1.7 equiv, even more preferably 1-1.5 equiv.

If the curing-reactive functional groups are amine, epoxy or isocyanate, the curing agents are preferably amine, sulfur or epoxy functional.

The curing agents can also be dual curing agents containing, for example, both amine/sulphur/epoxy/isocyanate and an alkoxysilane. Preferred dual curing agents are represented by the general formula below: 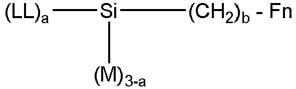 wherein
LL is independently selected from an unsubstituted or substituted monovalent hydrocarbon group of 1 to 6 carbon atoms;
each M is independently selected from a hydrolysable group such as an alkoxy group;
a is 0, 1 or 2, preferably 0 or 1;
b an integer from 1 to 6; and
Fn is an amine, epoxy, glycidyl ether, isocyanate or sulphur group.

Preferred examples of such dual curing agents include 3-isocyanatopropyltrimethoxysilane, 3- isocyanatopropyltriethoxysilane, 3-aminopropyltrimethoxysilane, 3-aminopropyltriethoxysilane, (3-glycidoxypropyl)trimethoxysilane, 3-mercaptopropyltrimethoxysilane. One particularly preferred curing agent is 3-aminopropyltriethyoxysilane such as Dynasylan AMEO from Evonik.

This type of dual-curing agents can be used as a separate curing agent or be used to end-cap the polysiloxane-based binder so that the end-groups of the polysiloxane-based binder are modified prior to the curing reaction. For example, the mixing of the polysiloxane-based binder and the curing agent can be carried out shortly before application of the coating to an article, e.g. an hour or less before coating or the polysiloxane-based binder can be supplied in curable form but kept dry in order to prevent premature curing. In some compositions the curing agent/end capping agent is preferably supplied separately to the rest of the coating composition to prevent curing before the coating has been applied to the object. Hence the coating composition of the invention can be supplied as a multipack (preferably three pack) formulation discussed in more detail below.

### Catalyst

In order to assist the curing process, the coating composition of the invention preferably comprises a catalyst. Representative examples of catalysts that can be used include transition metal compounds, metal salts and organometallic complexes of various metals, such as, tin, iron, lead, barium, cobalt, zinc, antimony, cadmium, manganese, chromium, nickel, aluminium, gallium, germanium, titanium, boron, lithium, potassium, bismuth and zirconium. The salts preferably are salts of long-chain carboxylic acids and/or chelates or organometal salts.

Examples of suitable tin-based catalysts include for example, dibutyltin dilaurate, dibutyltin dioctoate, dibutyltin diacetate, dibutyl tin 2-ethylhexanoate, dibutyltin dineodecanoate, dibutyltin dimethoxide, dibutyltin dibenzoate, dibutyltin acetoacetonate, dibutyltin acetylacetonate, dibutyltin alkylacetoacetonate, dioctyltin dilaurate, dioctyltin dioctoate, dioctyltin diacetate, dioctyl tin 2-ethylhexanoate, dioctyltin dineodecanoate, dioctyl tin dimethoxide, dioctyltin dibenzoate, dioctyltin acetoacetonate, dioctyltin acetylacetonate, dioctyltin alkylacetoacetonate, dimethyltin dibutyrate, dimethyltin bisneodecanoate, dimethyltin dineodecanoate, tin naphthenate, tin butyrate, tin oleate, tin caprylate, tin octanoate, tin strearate, triethyltin tartrate, isobutyltin triceroate and tin octoate. Examples of commercially available tin catalysts include BNT-CAT 400 and BNT-CAT 500 from BNT Chemicals, FASCAT 4202 from PMC Organometallix and Metatin Katalysator 702 from DOW. Preferred tin catalysts are dibutyltin dilaurate, dibutyltin dioctoate, dibutyltin diacetate, dioctyltin dilaurate

Examples of suitable zinc catalysts are zinc 2-ethylhexanoate, zinc naphthenate and zinc stearate. Examples of commercially available zinc catalysts include K-KAT XK-672 and K-KAT670 from King Industires and Borchi Kat 22 from Borchers.

Examples of suitable bismuth catalysts are organobismuth compounds such as bismuth 2-ethylhexanoate, bismuth octanoate and bismuth neodecanoate. Examples of commercial organobismuth catalysts are Borchi Kat 24 and Borchi Kat 315 from Borchers. K-KAT XK-651 from King Industries, Reaxis C739E50 from Reaxis and TIB KAT716 from TIB Chemicals.

Examples of suitable titanium catalysts are organotitanium catalysts such titanium naphthenate, tetrabutyl titanate, tetrakis(2- ethylhexyl)titanate, triethanolamine titanate, tetra(isopropenyloxy)-titanate, titanium tetrabutanolate, titanium tetrapropanolate, titanium tetraisopropanolate and chelated titanates such as diisopropyl bis(acetylacetonyl)titanate, diisopropyl bis(ethylacetoacetonyl)titanate and diisopropoxytitanium bis(ethylacetoacetate). Examples of suitable commercially available titanium catalysts are Tyzor IBAY from Dorf Ketal and TIB KAT 517 from TIB Chemicals

Other suitable catalysts are iron catalysts such as iron stearate and iron 2-ethylhexanoate, lead catalysts such as lead octoate and lead 2-ethyloctoate cobalt catalysts such as cobalt-2-ethylhexanoate and cobalt naphthenate, manganese catalysts such as manganese 2-ethylhexanoate and zirconium catalysts such as zirconium naphthenate, tetrabutyl zirconate, tetrakis(2- ethylhexyl) zirconate, triethanolamine zirconate, tetra(isopropenyloxy)-zirconate, zirconium tetrabutanolate, zirconium tetrapropanolate and zirconium tetraisopropanolate.

Further suitable catalysts are zirconate esters.

The catalyst may also be an organic compound, such as triethylamine, guanidine, amidine, cyclic amines, tetramethylethylenediamine, 1,4-ethylenepiperazine and pentamethyldiethylenetriamine. Further examples include aminosilanes, such as 3-aminopropyltriethoxysilane and N,N-dibutylaminomethyl-triethoxysilane.

In one preferred embodiment the catalyst is a tin, bismuth and/or zinc catalyst, more preferably a tin and/or bismuth catalyst.

Preferably the catalyst is present in the coating composition of the invention in an amount of 0.01 to 5 wt% based on the total dry weight of the coating composition, more preferably 0.05 to 4 wt%.

### Additive oil

The coating composition of the present invention optionally comprises an additive oil. Preferably the coating composition of the present invention comprises 0-30 wt% and more preferably 0.1-15 wt% additive oil, based on the solids content of the coating composition. The non-ionic hydrophilic modified polysiloxane described herein is not considered an 'additive oil'. Additive oils are therefore oils which are different to the non-ionic hydrophilic modified polysiloxane described herein.

Suitable unreactive additive oils are silicone oils such as methylphenyl silicone oil, petroleum oils, polyolefin oils, polyaromatic oils, fluoro resins such as polytetra- fluoroethylene or fluid fluorinated alkyl- or alkoxy-containing polymers, or lanolin and lanolin derivatives and other sterol(s) and/or sterol derivative(s) as disclosed in WO2013024106A1 or combinations thereof. A preferred unreactive additive oil is methylphenyl silicone oil.

A further additive oil optionally present in the coating compositions of the invention is fluorinated amphiphilic polymers/oligomers as described in WO2014131695.

The coating composition of the present invention optionally comprises hydrophilic-modified additive oils. The hydrophilic modified additive oils may be hydrophilic modified sterol (s) and/or sterol derivative (s) as described in WO2016004961 or hydrophilic modified acrylic polymers as described in WO2019101920 and WO2019101912.

The non-reactive hydrophilic-modified additive oils are typically modified by the addition of non-ionic monomeric, oligomeric or polymeric groups which can be polar and/or capable of hydrogen bonding, enhancing their interaction with polar solvents, in particular with water, or with other polar oligomeric or polymeric groups. Examples of these groups include, amides (e.g. pyrrolidone, poly(vinyl pyrrolidone), poly[N-(2- hydroxypropyl)methacrylamide]), poly(N,N-dimethacrylamide), acids (e.g. poly(acrylic acid)), alcohols (e.g. poly(glycerol), polyHEMA, polysaccharides, poly(vinyl alcohol)), ketones (polyketones), aldehydes (e.g. poly(aldehyde guluronate), amines (e.g. polyvinylamine), esters (e.g. polycaprolactones, poly(vinyl acetate)), , imides (e.g. poly(2-methyl-2-oxazoline)), etc., including copolymers of the foregoing.

### Co-binders

Optionally a co-binder may be present in the coating composition of the present invention in addition to the polysiloxane-based binder. Preferably the co-binder contains curing reactive groups that can react with the polysiloxane-based binder in the curing reaction. Representative examples of such co-binders include silicone resins, silicone-epoxy resins, silicone-polyester resins, polyurethane-based binders, polyol-based binders such as acrylic-polyol binders, polyester-based binders and acrylic-based binders.

### Pigments

The coating composition of the invention preferably comprises one or more pigments. The pigments may be inorganic pigments, organic pigments or a mixture thereof. Inorganic pigments are preferred. The pigments may be surface treated.

Representative examples of pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes). Preferred pigments are black iron oxide, red iron oxide, yellow iron oxide, phthalocyanine blue and titanium dioxide. In one preferred embodiment the titanium dioxide is surface treaded with a silicone compound, a zirconium compound or a zinc compound.

The amount of pigment present in the coating composition of the present invention is preferably 0 to 25 wt% and more preferably 0.5 to 15 wt% based on the total dry weight of the coating composition.

### Solvent

The fouling release coating composition of the present invention preferably comprises a solvent. Suitable solvents for use in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, propylene glycol methyl ether acetate; ethers such as ethylene glycol dimethyl ether, diethylene glycol dimethyl ether, dibutyl ether, dioxane, tetrahydrofuran; alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

The amount of solvent present in the fouling release coating compositions of the present invention is preferably as low as possible as this minimizes the VOC content. Preferably solvent is present in the compositions of the invention in an amount of 0-35 wt% and more preferably 1-30 wt% based on the total weight of the composition. The skilled man will appreciate that the solvent content will vary depending on the other components present.

### Fillers

The coating composition of the present invention optionally comprises fillers.

Examples of fillers that can be used in the coating composition according to the present invention are zinc oxide, barium sulphate, calcium sulphate, calcium carbonate, silicas or silicates (such as talc, feldspar, china clay and nepheline syenite) including fumed silica, bentonite and other clays, and solid silicone resins, which are generally condensed branched polysiloxanes. Some fillers such as fumed silica may have a thickening effect on the coating composition.

Preferred fillers are fumed silica fillers. The fumed silica fillers may have an untreated surface or a hydrophobically modified surface. Preferably the fumed silica filler has a hydrophobically modified surface. Examples of commercially available fumed silica fillers are TS-610, TS-530, EH-5, H-5, and M-5 from Cabot and Aerosil^{®} R972, Aerosil^{®} R974, Aerosil^{®} R976, Aerosil^{®} R104, Aerosil^{®} R202, Aerosil^{®} R208, Aerosil^{®} R805, Aerosil^{®} R812, Aerosil^{®} 816, Aerosil^{®} R7200, Aerosil^{®} R8200, Aerosil^{®} R9200, Aerosil^{®} R711 from Evonik.

The amount of fillers present in the coating composition of the present invention is preferably 0 to 25 wt%, more preferably 0.1 to 10 wt% and still more preferably 0.15 to 5 wt%, based on the total dry weight of the coating composition.

### Additives

The coating composition of the present invention optionally comprises one or more additives. Examples of additives that may be present in the coating composition of the invention include reinforcing agents, thixotropic agents, thickening agents, anti-settling agents, dehydrating agents, dispersing agents, wetting agents, surfactants, binders, plasticizers, and dyes.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax and mixtures thereof. Preferably thixotropic agents, thickening agents and anti-settling agents are each present in the composition of the invention in an amount of 0-10 wt%, more preferably 0.1-6 wt% and still more preferably 0.1-2.0 wt%, based on the total dry weight of the composition.

The dehydrating agents and desiccants that may be used in the fouling release coating compositions include organic and inorganic compounds. The dehydrating agents can be hygroscopic materials that absorb water or binds water as crystal water, often referred to as desiccants. Examples of desiccants include calcium sulphate hemihydrate, anhydrous calcium sulphate, anhydrous magnesium sulphate, anhydrous sodium sulphate, anhydrous zinc sulphate, molecular sieves and zeolites. The dehydrating agent can be a compound that chemically reacts with water. Examples of dehydrating agents that reacts with water include orthoesters such as trimethyl orthoformate, triethyl orthoformate, tripropyl orthoformate, triisopropyl orthoformate, tributyl orthoformate, trimethyl orthoacetate, triethyl orthoacetate, tributyl orthoacetate and triethyl orthopropionate; ketals; acetals; enolethers; orthoborates such as trimethyl borate, triethyl borate, tripropyl borate, triisopropyl borate, tributyl borate and tri-tert-butyl borate; organosilanes such as trimethoxymethyl silane, vinyltrimethoxysilane, phenyltrimethoxysilane, tetraethoxysilane and ethyl polysilicate.

Preferably the dehydrating agent is present in the compositions of the invention in an amount of 0-5 wt%, more preferably 0.5-2.5 wt% and still more preferably 1.0-2.0 wt%, based on the total dry weight of the composition.

### Composition and Paint

The present invention also relates to a method of preparing the composition as hereinbefore described wherein the components present in the composition are mixed. Any conventional production method may be used.

The composition as described herein may be prepared in a suitable concentration for use, e.g. in spray painting. In this case, the composition is itself a paint. Alternatively the composition may be a concentrate for preparation of paint. In this case, further solvent and optionally other components are added to the composition described herein to form paint. Preferred solvents are as hereinbefore described in relation to the composition.

After mixing, and optionally after addition of solvent, the fouling release coating composition or paint is preferably filled into a container. Suitable containers include cans, drums and tanks.

The fouling release coating composition may be supplied as one-pack, as a two- pack or as a three-pack. Preferably the composition is supplied as a two-pack or as a three-pack and still more preferably as a three-pack.

When supplied as a one-pack, the composition is preferably supplied in a ready-mixed or ready to use form. Optionally the one-pack product may be thinned with solvents prior to application.

When supplied as a two pack, the first container preferably comprises a polysiloxane-based binder, non-ionic hydrophilic-modified polysiloxane, and antifouling agent; and the second container preferably comprises crosslinking agent/curing agent and/or catalyst. Instructions for mixing the contents of the containers may optionally be provided.

When supplied as a three pack, the first container preferably comprises a polysiloxane-based binder, an antifouling agent and non-ionic hydrophilic-modified polysiloxane; the second container preferably comprises a crosslinking agent/a curing agent; and the third container preferably comprises a catalyst. Instructions for mixing the contents of the containers may optionally be provided.

In a particular embodiment, the invention provides a kit for preparing a fouling release composition as defined herein.

The fouling release coating composition and paint of the invention preferably has a solids content of 50-99 wt%, more preferably 60-99 wt% and still more preferably 65-99 wt%.

Preferably the fouling release coating composition and paint of the invention has a content of volatile organic compounds (VOC) of 50 to 400 g/L, preferably 50 to 350 g/L, e.g. 50 to 300 g/L. VOC content can be calculated (ASTM D5201-05A) or measured (US EPA method 24 or ISO 11890-1).

Preferably the fouling release coating composition and paint of the invention has a viscosity of 700 to 1100 mPa under a shear rate of 100/s.

The coating composition of the present invention may be applied to any pretreated coating layers designed for polysiloxane based fouling release coatings. Examples of such coating layers are epoxy anticorrosive layers and silicone containing tie-layers designed to ensure adhesion between the substrate and the final polysiloxane based fouling release layer. One example of such a tie-layer is described in WO2013/107827. Optionally the tie-layer may contain an antifouling agent.

It is also possible to apply the coating composition according to the present invention on a substrate containing an aged anti-fouling coating layer or fouling release layer. Before the coating composition according to the present invention is applied to such an aged layer, this old layer is cleaned by high-pressure water washing to remove any fouling.

The coating composition according to the present invention may be applied in one or two or more layers. Preferably the coating composition according to the present invention is applied in one layer

The dry film thickness of each of the coating layers of the coating composition of the present invention is preferably 50-500 µm, more preferably 100 - 400 µm, most preferably 150 - 300 µm.

The fouling release coating composition and paint of the invention can be applied to a whole or part of any article surface which is subject to marine fouling. The surface may be permanently or intermittently underwater (e.g. through tide movement, different cargo loading or swell). The article surface will typically be the hull of a vessel or surface of a fixed marine object such as an oil platform or buoy. Application of the coating composition and paint can be accomplished by any convenient means, e.g. via painting (e.g. with brush or roller) or more preferably spraying the coating onto the article. Typically the surface will need to be separated from the seawater to allow coating. The application of the coating can be achieved as conventionally known in the art. After the coating is applied, it is preferably dried and/or cured.

### Applications

The fouling release coating of the present invention is typically applied to the surface of a marine structure, preferably the part of a marine structure which is submerged when in use. Typical marine structures include vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc. The surface of the substrate may be the "native" surface (e.g. the steel surface).

### Examples

### Determination Methods

### Determination of polymer average molecular weights distribution

The polymers were characterised by Gel Permeation Chromatography (GPC) measurement. The molecular weight distribution (MWD) was determined using a Malvern Omnisec Resolve and Reveal system with two PLgel 5 µm Mixed-D columns from Agilent in series. The columns were calibrated by conventional calibration using narrow polystyrene standards. The analysis conditions were as set out in table 1 below.

**Table 1**

| | |
|---|---|
| Detector | RI |
| Wavelength | 640 nm |
| Flow cell volume | 12 µl |
| Column Set | Agilent PLgel 5 µm Mixed-D, 2 columns in series |
| Mobile Phase | THF |
| Flow rate | 1 ml/min |
| Injection volume | 100 µl |
| Autosampler Temperature | 25 °C |
| Column Oven Temperature | 35 °C |
| Detector Oven Temperature | 35 °C |
| Data Processing | Omnisec 5.1 |
| Calibration standards | Agilent Polystyrene Medium EasiVials (4 ml) Red, Yellow and Green |

Samples were prepared by dissolving an amount of non-ionic hydrophilic modified polysiloxane corresponding to 25 mg dry polymer in 5 ml THF. The samples were kept for a minimum of 3 hours at room temperature prior to sampling for the GPC measurements. Before analysis the samples were filtered through 0.45 µm Nylon filters. The weight-average molecular weight (Mw) and the number average molecular weight (Mn) is reported.

### Determination of viscosity of non-ionic hydrophilic modified polysiloxane

The viscosity of the non-ionic hydrophilic modified polysiloxanes was determined by using a Brookfield viscometer and spindles. The viscosity was determined at 25 °C on a Brookfield LVT Viscometer and corresponding LV spindle. The spindle was selected appropriate to the specification range of the non-ionic hydrophilic modified polysiloxane according to BROOKFIELD DIAL VISCOMETER Operating Instructions, Manual No. M/85-150-P700, Brookfield Engineering Laboratories, Inc.

### Determination of viscosity of paint formulations

The viscosity of the paint formulations (inventive and comparative examples) was determined at 23 °C by cone and plate. Cone diameter 40 mm, cone angle 4 °. The shear rate was ramped from 0.01/s to 100/s to obtain the shear rate dependent viscosity of the samples.

### Preparation of coating compositions

The coating compositions were prepared by first mixing the components in part (A) shown in Tables 5 and 6 below using a high-speed dissolver equipped with an impeller disc. The non-ionic hydrophilic modified polysiloxanes were added to the coating composition after the grinding phase. The components in part (B) were mixed with the components in part (A) shortly before application of the coating.

### Testing of antifouling performance in Singapore

PVC panels were coated with a first coat of Jotun Jotacote Universal N10 primer and a second coat of Jotun SeaQuest Tiecoat using airless spray within specified conditions. The coating compositions of the Inventive and Comparative Examples were applied to the PVC panels pre-coated with primer and tiecoat using a film applicator with a 300 µm clearance.

The panels were used for static testing on a raft in Singapore where the panels were submerged 0.3-1.3 m below the sea surface. The panels were evaluated by visual inspection using the scale shown in Table 2 below.

**Table 2: Rating for area covered by fouling**

| **Rating** | **Area covered by fouling** |
|---|---|
| Excellent | 0-10% |
| Good | 11 - 20 % |
| Fair | 21 - 30 % |
| Poor | 31 - 50 % |
| Extremely Poor | More than 50 % |

### Determination of coating adhesion

The coating adhesion was determined according to ASTM D6677:18. A rating equal to or above 5 was considered acceptable ('OK' in Tables 5 and 6).

### Determination of coating homogeneity

The coating homogeneity was determined by visual observation according to Table 3.

**Table 3: Visual observation rating**

| **Rating** | **Visual observation** |
|---|---|
| Excellent | Homogeneous smooth surface, no defects |
| Good | Homogeneous, hints of inhomogeneity (color difference, minor defects) |
| Fair | Fair homogeneity, small scale roughness, hints of phase separations |
| Poor | Poor homogeneity, rough surface, clear phase separation |
| Extremely poor | Extremely inhomogeneous, very rough, large scale phase separation |

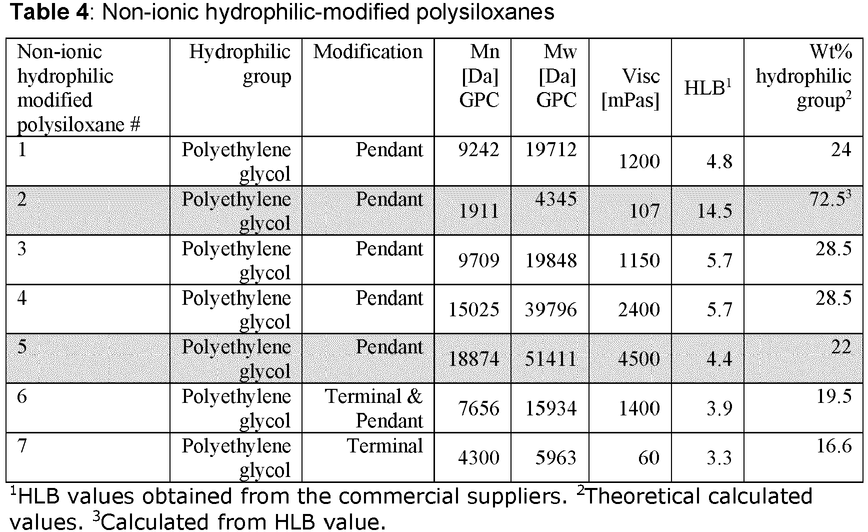

Non-ionic hydrophilic modified polysiloxanes with the properties given in table 4 are commercially available and can be readily obtained from commercial suppliers.

The coating composition and antifouling performance of the inventive and comparative examples are given in the Tables below.

**Table 5: Formulations**

| | **Inventive Examples** | | **Comparative Experiment** | | | | |
|---|---|---|---|---|---|---|---|
| | *1* | *2* | *1* | *2* | *3* | *4* | *5* |
| *Part A* | | | | | | | |
| α,ω-Hydroxypolydimethylsiloxane, (3500 mPas) | 57.4 | 50.2 | 71.6 | 66.1 | 63.0 | 60.1 | 42.3 |
| Hydrophobic silica | 0.5 | 0.5 | 0.5 | 0.5 | 0.5 | 0.5 | 0.5 |
| Iron oxide red | 3.2 | 3.2 | 3.2 | 3.2 | 3.0 | 2.9 | 3.2 |
| Copper pyrithione | 5.5 | 5.5 | 0.0 | 5.5 | 5.2 | 5.0 | 5.5 |
| Non-ionic hydrophilic modified polysiloxane 1 | 12.7 | 19.9 | 4.0 | 4.0 | 3.8 | 3.6 | 27.8 |
| Xylene | 20.7 | 20.7 | 20.7 | 20.7 | 24.5 | 27.9 | 20.7 |
| *Total part A* | 100.0 | 100.0 | 100.0 | 100.00 | 100.00 | 100.00 | 100.00 |
| | | | | | | | |
| *Viscosity [mPas @ shear 100*/*s]* | 948 | 828 | 886 | 1100 | 859 | 673 | 716 |
| *Oil Content (dry wt% of coating)* | 16 | 25 | 5 | 5 | 5 | 5 | 35 |
| *Oil Mn [Da] GPC* | 9242 | 9242 | 9242 | 9242 | 9242 | 9242 | 9242 |
| *Oil Mw [Da] GPC* | 19712 | 19712 | 19712 | 19712 | 19712 | 19712 | 19712 |
| *Oil Viscosity [mPas]* | 1200 | 1200 | 1200 | 1200 | 1200 | 1200 | 1200 |
| *Oil HLB* | 4.8 | 4.8 | 4.8 | 4.8 | 4.8 | 4.8 | 4.8 |
| *Hydrophilic qroups (wt%)* | 24 | 24 | 24 | 24 | 24 | 24 | 24 |
| | | | | | | | |
| *Part B* | | | | | | | |
| *Ethyl Silicate* | 4.3 | 3.8 | 5.3 | 5.0 | 4.3 | 4.3 | 3.2 |
| *Dibutyltin diacetate* | 0.4 | 0.4 | 0.4 | 0.4 | 0.4 | 0.4 | 0.4 |
| *1-Methoxy-2-propanol* | 3.8 | 3.8 | 3.8 | 3.8 | 3.8 | 3.8 | 3.8 |
| *Total part B* | 8.5 | 8.0 | 9.5 | 9.2 | 8.5 | 8.5 | 7.4 |
| | | | | | | | |
| *VOC (Theoretical [g*/*L])* | 252.1 | 251.1 | 248.8 | 253.4 | 284.4 | 314.1 | 249.9 |
| *Homogeniety (cured 300 µm)* | Good | Good | Excellent | Excellent | Excellent | Excellent | Poor |
| *Adhesion* | OK | OK | OK | OK | OK | OK | OK |
| *Raft results (Singapore 26 wk)* | Good | Excellent | n/a | Fair | n/a | n/a | Fair |

**Table 6: Formulations**

| | **Inventive Examples** | | | | **Comparative examples** | | | | |
|---|---|---|---|---|---|---|---|---|---|
| | 3 | 4 | *5* | *6* | *6* | *7* | *8* | *9* | *10* |
| *Part A* | | | | | | | | | |
| α,ω-Hydroxypolydimethyl -siloxane, (3500 mPas) | 57.4 | 57.4 | 57.4 | 57.4 | 57.4 | 50.2 | 66.1 | 57.4 | 50.2 |
| Hydrophobic silica | 0.5 | 0.5 | 0.5 | 0.5 | 0.5 | 0.5 | 0.5 | 0.5 | 0.5 |
| Iron oxide red | 3.2 | 3.2 | 3.2 | 3.2 | 3.2 | 3.2 | 3.2 | 3.2 | 3.2 |
| Copper pyrithione | 5.5 | 5.5 | 5.5 | 5.5 | 5.5 | 5.5 | 5.5 | 5.5 | 5.5 |
| Non-ionic hydrophilic modified polysiloxane 2 | 0.0 | 0.0 | 0.0 | 0.0 | 12.7 | 19.9 | 0.0 | 0.0 | 0.0 |
| Non-ionic hydrophilic modified polysiloxane 3 | 12.7 | 0.0 | 0.0 | 0.0 | 0.0 | 0.0 | 0.0 | 0.0 | 0.0 |
| Non-ionic hydrophilic modified polysiloxane 4 | 0.0 | 12.7 | 0.0 | 0.0 | 0.0 | 0.0 | 0.0 | 0.0 | 0.0 |
| Non-ionic hydrophilic modified polysiloxane 5 | 0.0 | 0.0 | 0.0 | 0.0 | 0.0 | 0.0 | 4.0 | 12.7 | 19.9 |
| Non-ionic hydrophilic modified polysiloxane 6 | 0.0 | 0.0 | 12.7 | 0.0 | 0.0 | 0.0 | 0.0 | 0.0 | 0.0 |
| Non-ionic hydrophilic modified polysiloxane 7 | 0.0 | 0.0 | 0.0 | 12.7 | 0.0 | 0.0 | 0.0 | 0.0 | 0.0 |
| Xylene | 20.7 | 20.7 | 20.7 | 20.7 | 20.7 | 20.7 | 20.7 | 20.7 | 20.7 |
| *Total part A* | 100.0 | 100.0 | 100.0 | 100.0 | 100.0 | 100.0 | 100.0 | 100.0 | 100.0 |
| | | | | | | | | | |
| *Viscosity [mPas @ shear 100*/*s]* | 929 | 1075 | 956 | 803 | 830 | 763 | 1164 | 1126 | 1056 |
| *Oil Content (dry wt%)* | 16 | 16 | 16 | 16 | 16 | 25 | 5 | 16 | 25 |
| *Oil Mn [Da] GPC* | 9709 | 15025 | 7656 | 4300 | 1911 | 1911 | 18874 | 18874 | 18874 |
| *Oil Mw [Da] GPC* | 19848 | 39796 | 15934 | 5963 | 4345 | 4345 | 51411 | 51411 | 51411 |
| *Oil Viscosity [mPas]* | 1150 | 2400 | 1400 | 60 | 107 | 107 | 4500 | 4500 | 4500 |
| *Oil HLB* | 5.7 | 5.7 | 3.9 | 3.3 | 14.5 | 14.5 | 4.4 | 4.4 | 4.4 |
| *Hydrophilic groups (wt%)* | 28.5 | 28.5 | 19.5 | 16.6 | 72.5 | 72.5 | 22 | 22 | 22 |
| | | | | | | | | | |
| *Part B* | | | | | | | | | |
| *Ethyl Silicate* | 4.3 | 4.3 | 4.3 | 4.3 | 4.3 | 3.8 | 5.0 | 4..3 | 3.8 |
| *Dibutyltin diacetate* | 0.4 | 0.4 | 0.4 | 0.4 | 0.4 | 0.4 | 0.4 | 0.4 | 0.4 |
| *1-Methoxy-2-propanol* | 3.8 | 3.8 | 3.8 | 3.8 | 3.8 | 3.8 | 3.8 | 3.8 | 3.8 |
| *Total part B* | 8.5 | 8.5 | 8.5 | 8.5 | 8.5 | 8.0 | 9.2 | 8.5 | 8.0 |
| | | | | | | | | | |
| *VOC (Theoretical [g*/*L])* | 252.1 | 252.1 | 252.1 | 252.1 | 252.1 | 251.1 | 253.4 | 252.1 | 251.1 |
| *Homogeniety (cured 300 µm)* | Excell ent | Excell ent | Good | Good | Fair | Extre mely poor | Excell ent | Excell ent | Excell ent |
| *Adhesion* | OK | OK | OK | OK | OK | N/A | OK | OK | OK |
| *Raft results (Singapore 26 wk)* | Good | Good | Good | Excell ent | Excell ent | Extre mely poor | Poor | Poor | Poor |

The following observations can be made with regards to the above examples.
- Comparative Example 2 illustrates that the addition of copper pyrithione to a coating containing polyether-modified polysiloxane increases the viscosity of the coating when compared with Comparative Example 1. The increased viscosity can have a negative effect on application properties and surface roughness. Additionally, 5 wt.% oil is not sufficient to reduce the increased viscosity coming from the addition of copper pyrithione.
- Inventive Examples 1 and 2 illustrate that a coating composition containing copper pyrithione and polyether-modified polysiloxane in amounts of 15-25 wt.% oil has good film homogeneity and good adhesion while maintaining a low VOC. Additionally, the viscosity increase seen in Comparative Example 2 is offset by the higher oil amount. The antifouling performance is also improved compared to Comparative Example 2 which contains 5 wt.% of the polyether modified polysiloxane.
- Comparative Example 2 shows that 5 wt.% oil is insufficient to achieve a satisfactory antifouling performance.
- Comparative Examples 3 and 4 show that thinning with solvent can reduce the viscosity of the copper pyrithione containing coating down to the initial level, but at a cost of increasing the VOC which has negative effects in terms of health and environmental concerns
- Comparative Example 5 shows that further increasing the oil to 35 wt.% (by dry weight) reduces VOC, and viscosity further, but at a cost of homogeneity of the coating and antifouling performance .
- Inventive Examples 3-6 show that there are several possible polyether-modified polysiloxane oils that exhibit good antifouling performance while maintaining a good film homogeneity and adhesion at a high oil amount of 16 wt.% (by dry weight). The oils with lower viscosity reduce the final viscosity of the coating to a higher degree.
- Comparative Examples 6 and 7 show that an oil with a HLB level of above 12 negatively affects the homogeneity and adhesion of the coating at oil levels of 16 and 25 wt% (by dry weight).
- Comparative Examples 8-10 show that oils with number average molecular weight above 18 000 give good film homogeneity and good adhesion at oil levels up to 34 wt.% (by dry weight) but the antifouling performance is poor.
This is probably due to that the migration of the oils through the film is restricted if the molecular weight is too high. If the viscosity of the oil is too high, more oil is also required to reduce the viscosity of the paint formulation.

In summary, in the present invention it has been found that by choosing non-ionic hydrophilic-modified polysiloxanes with specific parameters (amount, molecular weight and HLB) it is possible to obtain fouling release formulations containing biocides such as copper pyrithione that have low VOC, good application properties, good film homogeneity and adhesion and improved antifouling properties.

## Claims

1. A fouling release coating composition comprising:
a) a curable polysiloxane based binder comprising at least 50 wt% polysiloxane parts;
b) an antifouling agent; and
c) 10-30% by dry weight of a non-ionic hydrophilic-modified polysiloxane having
i) a hydrophilic-lipophilic balance (HLB) of 1-12 or a relative weight of hydrophilic moieties in the range 5-60 wt.%, and
ii) an Mn of 500-18,000 g/mol or a Mw of 1,000-50,000 g/mol.

2. The fouling release coating composition of any preceding claim, wherein the composition comprises 30-95 wt% polysiloxane-based binder, more preferably 40-90 wt% polysiloxane-based binder and still more preferably 50-90 wt% polysiloxane-based binder, based on the total dry weight of the composition.

3. The fouling release coating composition of any preceding claim, wherein the antifouling agent is present in an amount of 1-15 wt%, preferably 2-15 wt%, more preferably 3-12 wt%, by dry weight basis, based on the total dry weight of the composition.

4. The fouling release coating composition of any preceding claim, wherein the non-ionic hydrophilic-modified polysiloxane is present in an amount of 11-29 wt% by dry weight, preferably 12-28% by dry weight, preferably 13-27% by dry weight, preferably 14-26% by dry weight, e.g. 15-25 wt% by dry weight, based on the total dry weight of the composition.

5. The fouling release coating composition of any preceding claim, wherein the antifouling agent is zinc pyrithione or copper pyrithione, preferably copper pyrithione.

6. The fouling release coating composition of any preceding claim, wherein the non-ionic hydrophilic-modified polysiloxane has a number average molecular weight (Mn) in the range of 500-18,000 g/mol, such as in the range of 1000-16,000 g/mol, particularly in the ranges 2000-15,050 g/mol or 4000-15,050 g/mol and/or
a weight average molecular weight (Mw) of 2,000-45,000 g/mol, preferably 3,000-42,000 g/mol, 4,000-40,000 g/mol, or 5,000-40,000 g/mol.

7. The fouling release coating composition of any preceding claim, wherein the non-ionic hydrophilic-modified polysiloxane has a viscosity in the range of 20-4,000 mPa-s, preferably in the range of 30-3,000 mPa-s, in particular in the range of 50-2,500 mPa-s

8. The fouling release coating composition of any preceding claim, wherein the non-ionic hydrophilic-modified polysiloxane has an HLB (hydrophilic-lipophilic balance) in the range 1.0-10, more preferably 1.0-8.0, most preferably 2.0-7.0.

9. The fouling release coating composition of any preceding claim, wherein the polysiloxane-based binder is represented by formula D1: 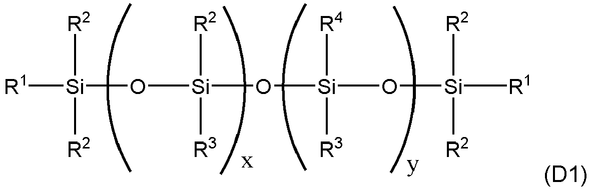 wherein
each R¹ is independently selected from a hydroxyl group, C₁₋₆-alkoxy group, C₁₋₆-hydroxyl group, C₁₋₆-epoxy containing group, C₁₋₆ amine group or O-Si(R⁵)₃-_{z} (R⁶)_{z} each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from an unsubstituted or substituted C₁₋₆ alkyl group;
z is 0 or an integer from 1-2;
x is an integer of at least 2;
y is an integer of at least 2;

10. The fouling release coating composition of any preceding claim, further comprising at least one of a filler, pigment, solvent, additive, curing agent and catalyst; or
a paint comprising a fouling release coating composition as claimed in claim 1 to 9 and at least one of a filler, pigment, solvent, additive, curing agent and catalyst.

11. The fouling release coating composition of any preceding claim, wherein said non-ionic hydrophilic modified polysiloxane is a polyether-modified polysiloxane.

12. The fouling release coating composition of any preceding claim, wherein said non-ionic hydrophilic modified polysiloxane is non-curable in the curing reaction of the binder at 0 - 40 °C.

13. A marine structure comprising on at least a part of the outer surface thereof a fouling release coating composition as claimed in any of claims 1 to 12.

14. A process for preparing the fouling release coating composition of any of claims 1 to 12, comprising a step of mixing:
a) a curable polysiloxane-based binder comprising at least 50 wt% polysiloxane parts;
b) an antifouling agent; and
c) 10-30% by dry weight of a non-ionic hydrophilic-modified polysiloxane typically in at least one solvent.

15. A kit for preparing a fouling release coating composition as claimed in any of claims 1-12, comprising:
(i) a first container containing the curable polysiloxane based binder, the antifouling agent and/or the non-ionic hydrophilic-modified polysiloxane;
(ii) a second container containing a crosslinking agent and/or a curing agent and optionally a catalyst;
(iii) optionally a third container containing a catalyst; and
(iv) optionally instructions for combining the contents of said containers.

## Patentansprüche

1. Fäulnisfreisetzungsbeschichtungszusammensetzung, umfassend:
a) ein härtbares Bindemittel auf Polysiloxanbasis, das mindestens 50 Gew.-% Polysiloxteile umfasst;
b) ein Antifäulnismittel; und
c) 10-30 % bezogen auf das Trockengewicht eines nicht-ionischen, hydrophil modifizierten Polysiloxans mit
i) einem Hydrophil-Lipophil-Gleichgewicht (HLB) von 1-12 oder einem relativen Gewicht der hydrophilen Anteile im Bereich von 5-60 Gew.-%, und
ii) einem Mn von 500-18.000 g/mol oder einem Mw von 1.000-50.000 g/mol.

2. Fäulnisfreisetzungsbeschichtungszusammensetzung nach einem vorstehenden Anspruch, wobei die Zusammensetzung 30-95 Gew.-% Bindemittel auf Polysiloxanbasis, mehr bevorzugt 40-90 Gew.-% Bindemittel auf Polysiloxanbasis und noch mehr bevorzugt 50-90 Gew.-% Bindemittel auf Polysiloxanbasis, basierend auf dem Gesamttrockengewicht der Zusammensetzung, umfasst.

3. Fäulnisfreisetzungsbeschichtungszusammensetzung nach einem vorstehenden Anspruch, wobei das Antifäulnismittel in einer Menge von 1-15 Gew.-%, vorzugsweise 2-15 Gew.-%, mehr bevorzugt 3-12 Gew.-%, bezogen auf das Gesamttrockengewicht der Zusammensetzung, vorliegt.

4. Fäulnisfreisetzungsbeschichtungszusammensetzung nach einem vorstehenden Anspruch, wobei das nicht-ionische, hydrophil modifizierte Polysiloxan in einer Menge von 11-29 Gew.-%, bezogen auf das Trockengewicht, vorzugsweise 12-28 Gew.-%, vorzugsweise 13-27 Gew.-%, bezogen auf das Trockengewicht, vorzugsweise 14-26 Gew.-%, z.B. 15-25 Gew.-%, bezogen auf das Gesamttrockengewicht der Zusammensetzung, vorliegt.

5. Fäulnisfreisetzungsbeschichtungszusammensetzung nach einem vorstehenden Anspruch, wobei das Antifäulnismittel Zinkpyrithion oder Kupferpyrithion, vorzugsweise Kupferpyrithion, ist.

6. Fäulnisfreisetzungsbeschichtungszusammensetzung nach einem vorstehenden Anspruch, wobei das nicht-ionische, hydrophil modifizierte Polysiloxan ein zahlenmittleres Molekulargewicht (Mn) im Bereich von 500-18.000 g/mol, wie im Bereich von 1000-16.000 g/mol, insbesondere in den Bereichen 2000-15.050 g/mol oder 4000-15.050 g/mol und/oder
ein gewichtsmittleres Molekulargewicht (Mw) von 2.000-45.000 g/mol, vorzugsweise 3.000-42.000 g/mol, 4.000-40.000 g/mol oder 5.000-40.000 g/mol aufweist.

7. Fäulnisfreisetzungsbeschichtungszusammensetzung nach einem vorstehenden Anspruch, wobei das nicht-ionische, hydrophil modifizierte Polysiloxan eine Viskosität im Bereich von 20-4.000 mPa-s, vorzugsweise im Bereich von 30-3.000 mPa-s, insbesondere im Bereich von 50-2.500 mPa-s, aufweist.

8. Fäulnisfreisetzungsbeschichtungszusammensetzung nach einem vorstehenden Anspruch, wobei das nicht-ionische, hydrophil modifizierte Polysiloxan einen HLB-Wert (Hydrophil-Lipophil-Gleichgewicht) im Bereich von 1,0-10, mehr bevorzugt 1,0-8,0, besonders bevorzugt 2,0-7,0 aufweist.

9. Fäulnisfreisetzungsbeschichtungszusammensetzung nach einem vorstehenden Anspruch, wobei das Bindemittel auf Polysiloxanbasis durch die Formel D1 dargestellt ist: 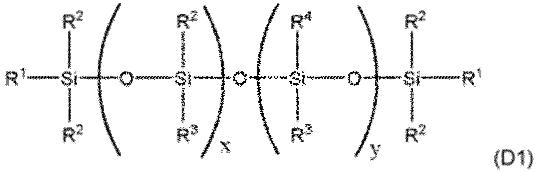 wobei
jedes R¹ unabhängig ausgewählt ist aus einer Hydroxylgruppe, C₁₋₆-Alkoxygruppe, C₁₋₆-Hydroxylgruppe, C₁₋₆-Epoxy enthaltenden Gruppe, C₁₋₆-Amingruppe oder O-Si(R⁵)a-_{z}(R⁶)_{z}, wobei jedes R² unabhängig ausgewählt ist aus C₁₋₁₀-Alkyl, C₆₋₁₀-Aryl, C₇₋₁₀-Alkylaryl oder C₁₋₆-Alkyl, substituiert durch Poly(alkylenoxid) und/oder eine Gruppe, wie für R¹ beschrieben;
jedes R³ und R⁴ unabhängig ausgewählt ist aus C₁₋₁₀-Alkyl, C₆₋₁₀ -Aryl, C₇₋₁₀-Alkylaryl oder C₁₋₆-Alkyl, substituiert durch Poly(alkylenoxid);
jedes R⁵ unabhängig eine hydrolysierbare Gruppe wie eineC₁₋₆-Alkoxygruppe, eine Acetoxygruppe, eine Enoxygruppe oder eine Ketoxygruppe ist;
jedes R⁶ unabhängig ausgewählt ist aus einer unsubstituierten oder substituierten C₁₋₆-Alkylgruppe;
z gleich 0 oder eine ganze Zahl von 1-2 ist;
x eine ganze Zahl von mindestens 2 ist;
y eine ganze Zahl von mindestens 2 ist;

10. Fäulnisfreisetzungsbeschichtungszusammensetzung nach einem vorstehenden Anspruch, weiter umfassend mindestens eines von einem Füllstoff, einem Pigment, einem Lösungsmittel, einem Additiv, einem Härtungsmittel und einem Katalysator; oder
einen Anstrich, der eine Fäulnisfreisetzungsbeschichtungszusammensetzung nach Anspruch 1 bis 9 und mindestens eines von einem Füllstoff, einem Pigment, einem Lösungsmittel, einem Additiv, einem Härtungsmittel und einem Katalysator umfasst.

11. Fäulnisfreisetzungsbeschichtungszusammensetzung nach einem vorstehenden Anspruch, wobei das nicht-ionische hydrophil modifizierte Polysiloxan ein Polyethermodifiziertes Polysiloxan ist.

12. Fäulnisfreisetzungsbeschichtungszusammensetzung nach einem vorstehenden Anspruch, wobei das nicht-ionische hydrophil modifizierte Polysiloxan bei der Aushärtungsreaktion des Bindemittels bei 0 - 40 °C nicht härtbar ist.

13. Marine Struktur, die auf mindestens einem Teil ihrer Außenoberfläche eine Fäulnisfreisetzungsbeschichtungszusammensetzung nach einem der Ansprüche 1 bis 12 umfasst.

14. Verfahren zur Herstellung der Fäulnisfreisetzungsbeschichtungszusammensetzung nach einem der Ansprüche 1 bis 12, umfassend einen Schritt des Mischens von:
a) einem härtbaren Bindemittel auf Polysiloxanbasis, das mindestens 50 Gew.-% Polysiloxteile umfasst;
b) einem Antifäulnismittel; und
c) 10-30 % bezogen auf das Trockengewicht einem nicht-ionischen, hydrophil modifizierten Polysiloxans in der Regel in mindestens einem Lösungsmittel.

15. Kit zur Herstellung einer Fäulnisfreisetzungsbeschichtungszusammensetzung nach einem der Ansprüche 1-12, umfassend:
(i) einen ersten Behälter, der das härtbare Bindemittel auf Polysiloxanbasis, das Antifäulnismittel und/oder das nicht-ionische, hydrophil modifizierte Polysiloxan enthält;
(ii) einen zweiten Behälter, der ein Quervernetzungsmittel und/oder ein Härtungsmittel und wahlweise einen Katalysator enthält;
(iii) wahlweise einen dritten Behälter, der einen Katalysator enthält; und
(iv) wahlweise Anweisungen zum Kombinieren des Inhalts der Behälter.

## Revendications

1. Composition de revêtement antisalissure comprenant :
a) un liant à base de polysiloxane durcissable comprenant au moins 50 % en poids de parties de polysiloxane ;
b) un agent antisalissure ; et
c) de 10-30 % en poids sec d'un polysiloxane modifié hydrophile non ionique présentant
i) un équilibre hydrophile-lipophile (HLB) de 1-12 ou un poids relatif de fractions hydrophiles dans la plage de 5-60 % en poids, et
ii) un Mn de 500-18 000 g/mol ou un Mw de 1000-50 000 g/mol.

2. Composition de revêtement antisalissure selon une quelconque revendication précédente, dans laquelle la composition comprend de 30-95 % en poids de liant à base de polysiloxane, plus préférentiellement de 40-90 % en poids de liant à base de polysiloxane et encore plus préférentiellement de 50-90 % en poids de liant à base de polysiloxane, sur la base du poids sec total de la composition.

3. Composition de revêtement antisalissure selon une quelconque revendication précédente, dans laquelle l'agent antisalissure est présent en une quantité de 1-15 % en poids, de préférence de 2-15 % en poids, plus préférentiellement de 3-12 % en poids, sur une base de poids sec, sur la base du poids sec total de la composition.

4. Composition de revêtement antisalissure selon une quelconque revendication précédente, dans laquelle le polysiloxane modifié hydrophile non ionique est présent en une quantité de 11-29 % en poids sec, de préférence de 12-28 % en poids sec, de préférence de 13 à 27 % en poids sec, de préférence de 14-26 % en poids sec, par exemple de 15-25 % en poids sec, sur la base du poids sec total de la composition.

5. Composition de revêtement antisalissure selon une quelconque revendication précédente, dans laquelle l'agent antisalissure est de la pyrithione de zinc ou de la pyrithione de cuivre, de préférence de la pyrithione de cuivre.

6. Composition de revêtement antisalissure selon une quelconque revendication précédente, dans laquelle le polysiloxane modifié hydrophile non ionique présente un poids moléculaire moyen en nombre (Mn) dans la plage de 500-18 000 g/mol, par exemple dans la plage de 1000-16 000 g/mol, en particulier dans les plages de 2 000-15 050 g/mol ou de 4 000-15 050 g/mol, et/ou
un poids moléculaire moyen en poids (Mw) de 2 000-45 000 g/mol, de préférence de 3 000-42 000 g/mol, de 4 000-40 000 g/mol ou de 5 000-40 000 g/mol.

7. Composition de revêtement antisalissure selon une quelconque revendication précédente, dans laquelle le polysiloxane modifié hydrophile non ionique présente une viscosité dans la plage de 20-4 000 mPa-s, de préférence dans la plage de 30-3 000 mPa-s, en particulier dans la plage de 50-2 500 mPa-s.

8. Composition de revêtement antisalissure selon une quelconque revendication précédente, dans laquelle le polysiloxane modifié hydrophile non ionique présente un HLB (équilibre hydrophile-lipophile) dans la plage de 1,0-10, plus préférentiellement de 1,0-8,0, et le plus préférentiellement de 2,0-7,0.

9. Composition de revêtement antisalissure selon une quelconque revendication précédente, dans laquelle le liant à base de polysiloxane est représenté par la formule D1 : 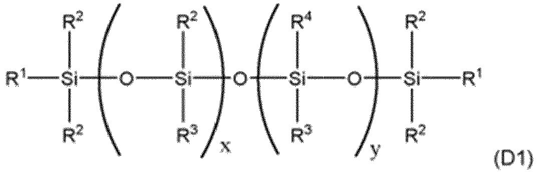 dans laquelle
chaque R¹ est indépendamment sélectionné parmi un groupe hydroxyle, un groupe alcoxy en C₁₋₆, un groupe hydroxyle en C₁₋₆, un groupe contenant de l'époxy en C₁₋₆, un groupe amine en C₁₋₆ ou O-Si(R⁵)₃-_{z}(R⁶)_{z}, chaque R² est indépendamment sélectionné parmi un alkyle en C₁₋₁₀, un aryle en C₆₋₁₀, un alkylaryle en C₇₋₁₀ ou un alkyle en C₁₋₆ substitué par un poly(oxyde d'alkylène) et/ou un groupe tel que décrit pour R¹ ;
chaque R³ et R⁴ est indépendamment sélectionné parmi un alkyle en C₁₋₁₀, un aryle en C₆₋₁₀, un alkylaryle en C₇₋₁₀ ou un alkyle en C₁₋₆ substitué par un poly(oxyde d'alkylène) ;
chaque R⁵ est indépendamment un groupe hydrolysable tel qu'un groupe alcoxy en C₁₋₆, un groupe acétoxy, un groupe énoxy ou un groupe cétoxy ;
chaque R⁶ est indépendamment sélectionné parmi un groupe alkyle en C₁₋₆ non substitué ou substitué ;
z est 0 ou un nombre entier de 1-2 ;
x est un nombre entier d'au moins 2 ;
y est un nombre entier d'au moins 2.

10. Composition de revêtement antisalissure selon une quelconque revendication précédente, comprenant en outre au moins l'un parmi une charge, un pigment, un solvant, un additif, un agent de durcissement et un catalyseur ; ou
une peinture comprenant une composition de revêtement antisalissure selon la revendication 1 à 9 et au moins l'un parmi une charge, un pigment, un solvant, un additif, un agent de durcissement et un catalyseur.

11. Composition de revêtement antisalissure selon une quelconque revendication précédente, dans laquelle ledit polysiloxane modifié hydrophile non ionique est un polysiloxane modifié polyéther.

12. Composition de revêtement antisalissure selon une quelconque revendication précédente, dans laquelle ledit polysiloxane modifié hydrophile non ionique n'est pas durcissable dans la réaction de durcissement du liant à 0 - 40 °C.

13. Structure marine comprenant, sur au moins une partie de la surface extérieure de celle-ci, une composition de revêtement antisalissure selon l'une quelconque des revendications 1 à 12.

14. Processus de préparation de la composition de revêtement antisalissure selon l'une quelconque des revendications 1 à 12, comprenant une étape consistant à mélanger :
a) un liant à base de polysiloxane durcissable comprenant au moins 50 % en poids de parties de polysiloxane ;
b) un agent antisalissure ; et
c) de 10-30 % en poids sec d'un polysiloxane modifié hydrophile non ionique, généralement dans au moins un solvant.

15. Kit de préparation d'une composition de revêtement antisalissure selon l'une quelconque des revendications 1-12, comprenant :
(i) un premier récipient contenant le liant à base de polysiloxane durcissable, l'agent antisalissure et/ou le polysiloxane modifié hydrophile non ionique ;
(ii) un deuxième récipient contenant un agent de réticulation et/ou un agent de durcissement et, facultativement, un catalyseur ;
(iii) facultativement un troisième récipient contenant un catalyseur ; et
(iv) facultativement des instructions pour combiner le contenu desdits récipients.
